(19) Europäisches Patentamt
European Patent Office
Office européen des brevets

(11) **EP 4 741 998 A1**

(12) **EUROPEAN PATENT APPLICATION**
published in accordance with Art. 153(4) EPC

(43) Date of publication:
**13.05.2026 Bulletin 2026/20**

(21) Application number: **24894751.7**

(22) Date of filing: **13.11.2024**

(51) International Patent Classification (IPC):
***G06F 1/26*** (2006.01)   ***G06F 1/28*** (2006.01)

(52) Cooperative Patent Classification (CPC):
**G06F 1/26; G06F 1/28**

(86) International application number:
**PCT/KR2024/096537**

(87) International publication number:
**WO 2025/110861 (30.05.2025 Gazette 2025/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.11.2023 KR 20230162565
12.11.2024 KR 20240160296**

(71) Applicant: **LG Energy Solution, Ltd.
Seoul 07335 (KR)**

(72) Inventors:
• **KIM, Myung-Hwan**
 **Daejeon 34122 (KR)**
• **KIM, Seung-Choo**
 **Daejeon 34122 (KR)**
• **RYU, Je-Chang**
 **Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **POWER SUPPLY CONTROL APPARATUS AND POWER SUPPLY CONTROL METHOD**

(57)    Provided are a power supply control apparatus and a power supply control method. The power supply control apparatus according to the present disclosure includes a monitoring unit to monitor first to n-th operation times of first to n-th power modules connected in parallel to supply direct current power to an electrical load device, and a main control unit to control each of the first to n-th power modules into an operating state or a non-operating state based on the first to n-th operation times.

FIG. 3

EP 4 741 998 A1

# EP 4 741 998 A1

**Description**

TECHNICAL FIELD

The present disclosure relates to control technology for suppressing the life deviation between a plurality of power modules.

This application is based on and claims priority from Korean Patent Application No. 10-2023-0162565 filed on November 21, 2023 and Korean Patent Application No. 10-2024-0160296 filed on November 12, 2024, with the Korean Intellectual Property Office, the disclosures of which are incorporated herein in its entirety by reference.

BACKGROUND

A power supply that supplies power to an electrical load (for example, at least one battery charger/discharger) may include an assembly of power modules connected in parallel, in order to solve problems with heat generation and failed systematic response to fault diagnosis as well as achieve more stable power supply to the electrical load.

Electric vehicles, ships and large-capacity energy storage systems (ESS) are more likely to raise safety accident prevention and stable power supply issues, and thus they usually include such power modules.

The power supply including the plurality of power modules may have various advantages of high scalability in keeping up with increasing load, higher space utilization than a single large-capacity power module, robustness against failures and errors and no need to shut off the power supply to the electrical load during replacement of the individual power module.

Typically, the power modules that make up the power supply are electrically connected in parallel to the electrical load and configured to supply the power to the electrical load through relay control.

This type of power supply is generally managed in a manner that adjusts the number of individual power modules that will operate according to the scale or magnitude of power to be supplied, i.e., by a control method that sequentially increases the number of power modules that will supply the power with increasing load.

That is, the conventional power supply is not managed by accurately monitoring the operation time (driving time) of the individual power modules, and precisely controlling to prevent deviations of operation time between the power modules based on the monitoring results.

Accordingly, the conventional power supply using this method may not have a grave problem while in use for a short time, but as the power supply is used for a longer time, the deviation of operation time (driving time) between power modules that do more work and power modules that do less work may gradually increase.

When the deviation increases so much, it may have a great influence on the operation performance or life of the individual power modules, and the characteristics and performance of the power modules connected in parallel may greatly differ, causing performance degradation of the power supply itself, such as declines in available output.

DISCLOSURE

Technical Problem

The present disclosure is designed to solve the above-described problems under these circumstances, and therefore the present disclosure is directed to providing a power supply control apparatus and method in which continuous and cyclic monitoring results of the operation time of each of power modules that make up a power supply are incorporated into operation control, thereby minimizing operation time deviations between the power modules, improving the operation performance of the power supply and contributing to the long life.

The technical problems to be solved by the present disclosure are not limited to the aforementioned problems, and these and other problems will be clearly understood by those skilled in the art from the following description.

Technical Solution

A power supply control apparatus according to an aspect of the present disclosure is for first to n-th power modules connected in parallel to supply direct current power to an electrical load device. n is a natural number of 2 or greater. The power supply control apparatus includes a monitoring unit to monitor first to n-th operation times of the first to n-th power modules; and a main control unit to control each of the first to n-th power modules into an operating state or a non-operating state based on the first to n-th operation times.

The main control unit may be configured to calculate first to n-th time deviations by statistical processing for the first to n-th operation times. The main control unit may be configured to select any one power module in the non-operating state from among the first to n-th power modules when the time deviation of any one power module in the operating state

2

among the first to n-th power modules is equal to or more than a reference deviation. The main control unit may be configured to change the selected power module from the non-operating state to the operating state.

The main control unit may be configured to output a first command signal for changing the selected power module from the non-operating state to the operating state. The main control unit may be configured to output a second command signal for changing the power module having the time deviation equal to or more than the reference deviation from the operating state to the non-operating state when a dead band time has passed from an output time of the first command signal.

The main control unit may be configured to update the first to n-th time deviations periodically or aperiodically.

When two or more of the first to n-th power modules are in the non-operating state, the main control unit may be configured to select any one of the two or more power modules in the non-operating state based on the operation time, an idle time or an identification number of each of the two or more power modules in the non-operating state.

When a load factor of each power module in the operating state among the first to n-th power modules exceeds an upper limit of an allowable load factor, the main control unit may be configured to select any one power module in the non-operating state from among the first to n-th power modules, and change the selected power module from the non-operating state to the operating state.

The power supply control apparatus may further include an information sharing unit to generate danger alarm information when all the first to n-th power modules are in the operating state and a load factor of each of the first to n-th power modules exceeds an upper limit of an allowable load factor.

When a load factor of two or more power modules in the operating state among the first to n-th power modules is below a lower limit of an allowable load factor, the main control unit may be configured to change any one of the two or more power modules in the operating state from the operating state to the non-operating state.

A direct current power supply system according to another aspect of the present disclosure includes the power supply control apparatus.

A power supply control method according to still another aspect of the present disclosure is provided for first to n-th power modules connected in parallel to supply direct current power to an electrical load device. n is a natural number of 2 or greater. The power supply control method includes monitoring first to n-th operation times of the first to n-th power modules; and controlling each of the first to n-th power modules into an operating state or a non-operating state based on the first to n-th operation times.

The step of controlling each of the first to n-th power modules into the operating state or the non-operating state includes calculating first to n-th time deviations by statistical processing for the first to n-th operation times; selecting any one power module in the non-operating state from among the first to n-th power modules when the time deviation of any one power module in the operating state among the first to n-th power modules power modules is equal to or more than a reference deviation; and changing the selected power module from the non-operating state to the operating state.

The step of selecting any one power module in the non-operating state from among the first to n-th power modules may include, when two or more power modules are in the non-operating state among the first to n-th power modules, selecting any one of the two or more power modules in the non-operating state based on the operation time, an idle time or an identification number of each of the two or more power modules in the non-operating state.

The power supply control method may further include, when a load factor of each power module in the operating state among the first to n-th power modules exceeds an upper limit of an allowable load factor, selecting any one power module in the non-operating state from among the first to n-th power modules; and changing the selected power module from the non-operating state to the operating state.

The power supply control method may further include, when a load factor of two or more power modules in the operating state among the first to n-th power modules is below a lower limit of an allowable load factor, changing any one of the two or more power modules in the operating state from the operating state to the non-operating state.

Advantageous Effects

According to the present disclosure, as operation time (driving time) balancing of the individual power modules is applied in a time series manner based on cyclic or recursive statistical processing results of the operation time of the power modules included in the power supply, life deviations between the plurality of power modules may be effectively suppressed.

Additionally, according to at least one embodiment of the present disclosure, as power modules that will or will not supply the power to the electrical load are selected using the priority criterion based on the minimum operation time, in the case of increases in the load required for the device to which power is supplied, deviations of operation time between the individual power modules may be minimized.

Additionally, according to at least one embodiment of the present disclosure, as the operation of the individual power modules is allowed or stopped so that the load factor of the power module in operation lies in the allowable load factor range, in the case of changes in power consumption of the electrical load, unnecessary power losses may be minimized, thereby achieving high efficiency operation. This is because the input/output efficiency (power conversion efficiency) of the power module is maintained at the predetermined level or above while in operation at the load factor within the allowable load factor range.

According to at least one embodiment of the present disclosure, as the band time between the signal system for stopping the operation of any one power module and the signal system for starting the operation of the other power module is set, it may be possible to ensure the operational certainty of the state switching process between the two power modules.

Additionally, according to at least one embodiment of the present disclosure, as some of the power modules that will or will not supply the power to the electrical load are selected based on the operation time of each power module and further based on the idle time of each power module, deviations of performance and life between the power modules may be reduced more effectively.

BRIEF DESCRIPTION OF THE DRAWINGS

The accompanying drawings illustrate the exemplary embodiments of the present disclosure and serve to provide a more effective understanding of the technical aspect of the present disclosure together with the following detailed description, and thus the present disclosure should not be constructed as being limited to the drawings.

FIG. 1 is a diagram schematically showing the configuration of a direct current power supply system according to an embodiment of the present disclosure.

FIG. 2 is a diagram schematically showing an exemplary wiring relationship between a power supply control apparatus, a power supply and an electrical device.

FIG. 3 is a block diagram schematically showing the configuration of a power supply control apparatus according to an embodiment of the present disclosure.

FIG. 4 is a block diagram schematically showing the configuration of a main control unit shown in FIG. 3.

FIG. 5 is a flowchart illustrating a process of minimizing deviations of operation time according to an embodiment of the present disclosure.

FIG. 6 is a flowchart illustrating a process of selecting a power module of interest using a relative relationship of idle time.

FIG. 7 is a flowchart illustrating a process of subroutines for cyclically calculating time deviations of operation times.

FIGS. 8 and 9 are flowcharts exemplarily illustrating a process for maintaining a load factor of each power module in an operating state within an allowable load factor range.

FIG. 10 is a diagram referenced in describing an example of a process for suppressing deviations of operation time between a plurality of power modules.

BEST MODE

Hereinafter, the exemplary embodiment of the present disclosure will be described in detail with reference to the accompanying drawings. Prior to the description, the terms or words used in the specification and the appended claims should not be construed as being limited to general and dictionary meanings, and rather, should be interpreted based on the meanings and concepts corresponding to the technical aspect of the present disclosure on the basis of the principle that the inventor is allowed to define the terms appropriately for the best explanation.

Therefore, the embodiments described herein and the illustrations shown in the drawings are provided to describe the technical aspect of the present disclosure for illustrative purposes but not intended to be limiting, so it should be understood that a variety of other equivalents and modifications could have been made thereto at the time the application was filed.

In describing the present disclosure, when it is determined that a certain detailed description of related known elements or functions may make the subject matter of the present disclosure ambiguous or vague, the detailed description is omitted.

Unless the context clearly indicates otherwise, the terms "comprise" and "include" when used in this specification, specify the presence of stated elements, but do not preclude the presence or addition of one or more other elements.

Furthermore, the term processor as used herein refers to a processing unit of at least one function or operation, and may be implemented by either hardware or software or a combination thereof.

In addition, throughout the specification, it should be further understood that when an element is referred to as being "connected to" another element, it may be directly connected to the other element or intervening elements may be present.

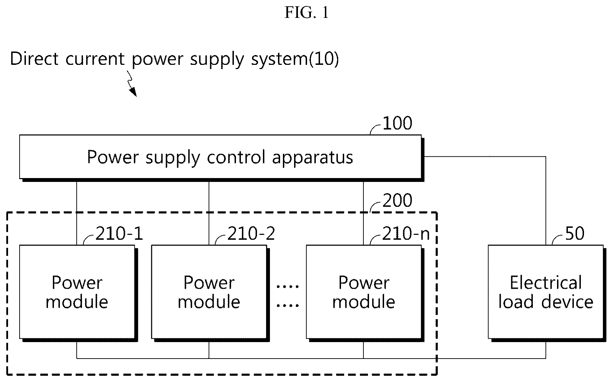

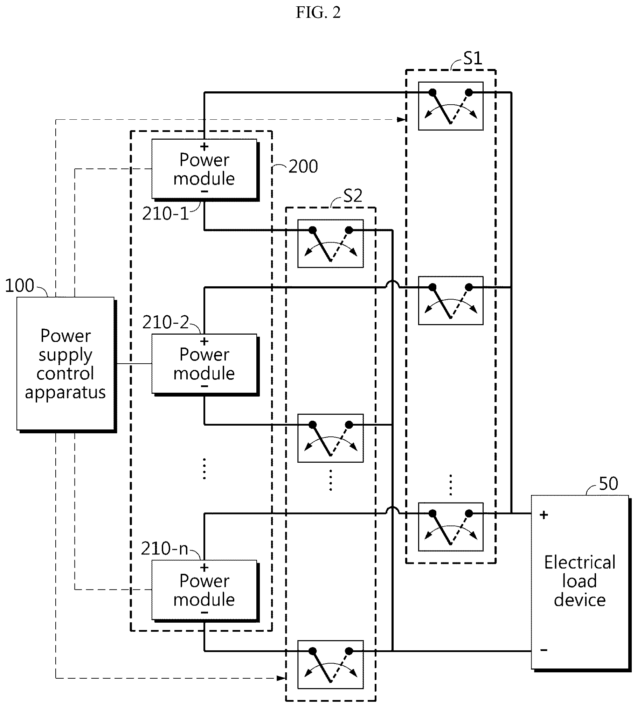

FIG. 1 is a diagram schematically showing the configuration of a direct current power supply system 10 according to an embodiment of the present disclosure, and FIG. 2 is a diagram schematically showing an exemplary wiring relationship between a power supply control apparatus 100, a power supply 200 and an electrical load device 50.

Referring to FIG. 1, the direct current power supply system 10 includes the electrical load device 50, the power supply control apparatus 100 and the power supply 200.

The power supply control apparatus 100 is an apparatus for monitoring and managing/controlling the operation of the power supply 200 that supplies direct current power to the electrical load device 50.

The electrical load device 50 is a load using electricity as a power source and is supplied with power from the power supply 200. The electrical load device 50 may include, for example, at least one battery charger/discharger in a battery manufacturing plant. The electrical load device 50 may be the term used to refer collectively to various electrical devices, electrical equipment, electrical facilities and so on.

The power supply 200 may include first to n-th power modules 210-1 to 210-n. Here, n denotes a natural number of 2 or greater. When i is a natural number of n or smaller, the reference numeral 210-i indicates an i-th power module among the first to n-th power modules 210-1 to 210-n. Hereinafter, in the common description to the first to n-th power modules 210-1 to 210-n, it should be noted that the reference numeral 210 may be simply affixed to the power module.

As shown in FIG. 2, each of the first to n-th power modules 210-1 to 210-n is electrically connected in parallel to the power supply 200, and supplies power to the power supply 200 as a first switching means S1 installed on the plus line and a second switching means S2 installed on the minus line are selectively turned on and off by the control of the power supply control apparatus 100.

The configuration diagram shown in FIG. 2 shows an example of a wiring relationship between the first to n-th power modules 210-1 to 210-n and the electrical load device 50 for the direct current power supply from the first to n-th power modules 210-1 to 210-n to the electrical load device 50. Accordingly, any other design and configuration for the direct current power supply from the first to n-th power modules 210-1 to 210-n connected in parallel to the electrical load device 50 may be contemplated.

The power module 210 generally includes a direct current power source, but is not limited thereto. As the power source may be converted through various methods with an addition of direct current (DC) converters, transformers or smoothing circuits and their circuit configurations, the power module 210 may include an alternating current power source.

In addition, the power module 210 may include a secondary battery, and according to embodiments, may include various types and forms of power storage devices or power supply devices.

Hereinafter, the detailed configuration of the power supply control apparatus 100 and processes performed by the power supply control apparatus 100 will be described in detail with reference to the accompanying drawings.

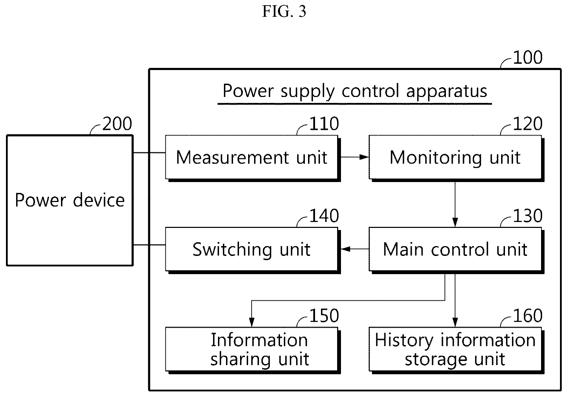

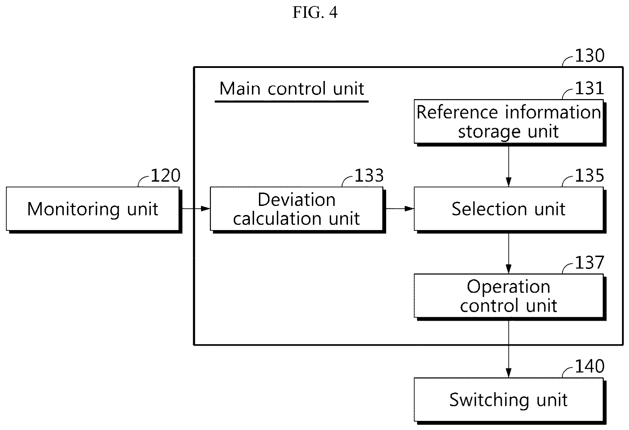

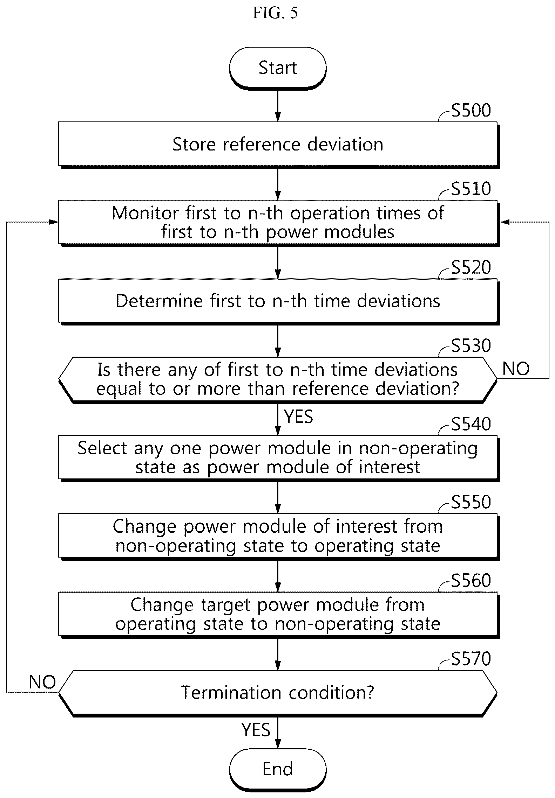

FIG. 3 is a block diagram schematically showing the configuration of the power supply control apparatus 100 according to an embodiment of the present disclosure, FIG. 4 is a block diagram schematically showing the configuration of a main control unit 130 shown in FIG. 3, and FIG. 5 is a flowchart illustrating a process of minimizing deviations of operation time according to an embodiment of the present disclosure.

Referring to FIG. 3, the power supply control apparatus 100 may include a measurement unit 110, a monitoring unit 120, the main control unit 130, a switching unit 140, an information sharing unit 150 and a history information storage unit 160.

The power supply control apparatus 100 may be implemented through a variety of combinational applications of electronic devices or components (ASIC, chipset, logic circuit, register, communication modem, MCU, etc.) such as storage means, operation processing means or input/output means.

It should be understood that the components of the power supply control apparatus 100 shown in FIG. 3 may be physically separable components or alternatively, may be functionally or logically separable components. The same is the case with each component of the main control unit 130 shown in FIG. 4.

That is, each component shown in the drawings is the logical component for effectively describing the technical aspect of the present disclosure, so it should be interpreted that each component carrying out the function performed by the logical component of the present disclosure either separately or together falls within the scope of the present disclosure, and it should be further interpreted that the components performing the same or similar functions fall within the scope of the present disclosure irrespective of whether or not the names are exactly the same.

In addition, a power supply control method according to the present disclosure may be implemented by a set of processes or algorithms related to data processing, manipulation, control, calculation or input/output, and thus, it may be implemented by a combination of the components shown in FIG. 3 as well as in the form of software that is installed and runs on a system, a device, a computer (or its similar device), a Battery Management System (BMS), a module or lower level components thereof.

The monitoring unit 120 may monitor the operation time of each of the first to n-th power modules 210-1 to 210-n of the power supply 200 (step S510, see FIG. 5) and output data associated with the operation time of each power module 210 to the main control unit 130.

In this specification, the operation time of the power module 210 may refer to a total amount of time (accumulated time) the power module 210 has operated in an operating state for a period of time from a specific time in the past to the current time. The specific time in the past may be, for example, the time when the power module 210 was first used to supply direct current power to the electrical load device 50 after it was mounted on the direct current power supply system 10.

According to embodiments, the monitoring unit 120 may be electrically connected to each of the first to n-th power modules 210-1 to 210-n, and configured to generate time information associated with whether each power module 210 is in operation or not and an operation state of the power module 210 by using the measurement results of the measurement unit 110 that measures electrical characteristic values such as current output from each power module 210.

In response to input data indicating the first to n-th operation times individually associated with the first to n-th power modules 210-1 to 210-n to the main control unit 130 through the monitoring unit 120, the main control unit 130 individually controls the operation of each of the first to n-th power modules 210-1 to 210-n to minimize deviations between the first to n-th operation times (steps S550 and S560). Among the first to n-th operation times, an i-th operation time is the operation time of the i-th power module 210-i among the first to n-th power modules 210-1 to 210-n.

Specifically, the main control unit 130 may include a reference information storage unit 131, a deviation calculation unit 133, a selection unit 135 and an operation control unit 137 as shown in FIG. 4.

The reference information storage unit 131 stores information indicating a reference deviation (step S500). The reference deviation may indicate the maximum limit of the time deviation of the operation time allowed for the first to n-th power modules 210-1 to 210-n.

The reference deviation may be a predetermined fixed value. Alternatively, the reference deviation may be variably set, taking into account attribute information such as power consumption of the electrical load device 50 connected to the power supply 200 or specification information such as discharge rate and discharge capacity of the power module 210.

The deviation calculation unit 133 may calculate a time deviation of each of the first to n-th operation times by statistical processing for the first to n-th operation times inputted from the monitoring unit 120 (see step S520 in FIG. 5). The term 'time deviation' as used herein may also be referred to as 'individual deviation'.

The process of calculating the time deviation is a process corresponding to an individual subroutine (step subroutine) that is performed independently from the main process of the present disclosure, and may be configured to continuously update the time deviation according to a set criterion, for example, periodically or aperiodically. Its embodiment will be described in detail below.

The deviation calculation unit 133 may determine an average (for example, arithmetic mean, weighted mean or harmonic mean) of the first to n-th operation times by statistical processing of data associated with the first to n-th operation times from the monitoring unit 120. Equation 1 below may be used to calculate the arithmetic mean of the first to n-th operation times.

<Equation 1>

$$A = \frac{1}{n} \sum_{k=1}^{n} T_k$$

The deviation calculation unit 133 may determine first to n-th time deviations of the first to n-th power modules 210-1 to 210-n (step S520).

Equation 2 below may be used to calculate the time deviation of each of the first to n-th power modules 210-1 to 210-n.

<Equation 2>

$$\sigma_k = T_k - A$$

In Equations 1 and 2, $T_k$ is the operation time of a k-th power module 210-k, n is the total number of power modules 210, A is the average of the first to n-th operation times, and $\sigma_k$ is a difference between $T_k$ and A, i.e., the time deviation of the k-th power module 210-k.

The selection unit 135 may classify each of the first to n-th power modules 210-1 to 210-n into an 'operating module' or a 'non-operating module'. The 'operating module' refers to the power module 210 in an operating state, and the 'non-operating module' refers to the power module 210 in a non-operating state.

In addition, in response to input data associated with the time deviation of each of the first to n-th power modules 210-1 to 210-n from the deviation calculation unit 133, the selection unit 135 performs a process of comparing each of the time deviations with the reference deviation (see step S530 in FIG. 5).

When the output value of the step S530 is "YES", the selection unit 135 may select any one power module currently in the non-operating state from among the first to n-th power modules 210-1 to 210-n (see step S540 in FIG. 5). When two or more power modules are in the non-operating state, the selection unit 135 may select any one of the two or more power modules.

Hereinafter, for convenience of description and understanding, the power module having the time deviation equal to or more than the reference deviation may be referred to as 'target power module'. In addition, the power module in the non-operating state having the shortest operation time (or longest idle time or highest priority identification number) may be referred to as 'power module of interest'. For reference, the first to n-th identification numbers may be individually pre-assigned to the first to n-th power modules 210-1 to 210-n. The priority between the first to n-th identification numbers may be preset.

The operation control unit 137 may control the switching unit 140 to change the power module of interest 210 from the non-operating state to the operating state (see step S550 in FIG. 5). In addition, the operation control unit 137 may change the target power module 210 from the operating state to the non-operating state (see step S560 in FIG. 5).

In contrast, when there is no power module 210 having the time deviation equal to or more than the reference deviation, it may be regarded as a balanced state in which deviation does not occur in the operation time between the power modules 210-1 to 210-n, i.e., the time deviation of the operation time between the power modules 210-1 to 210-n is properly suppressed, on the basis of the current time.

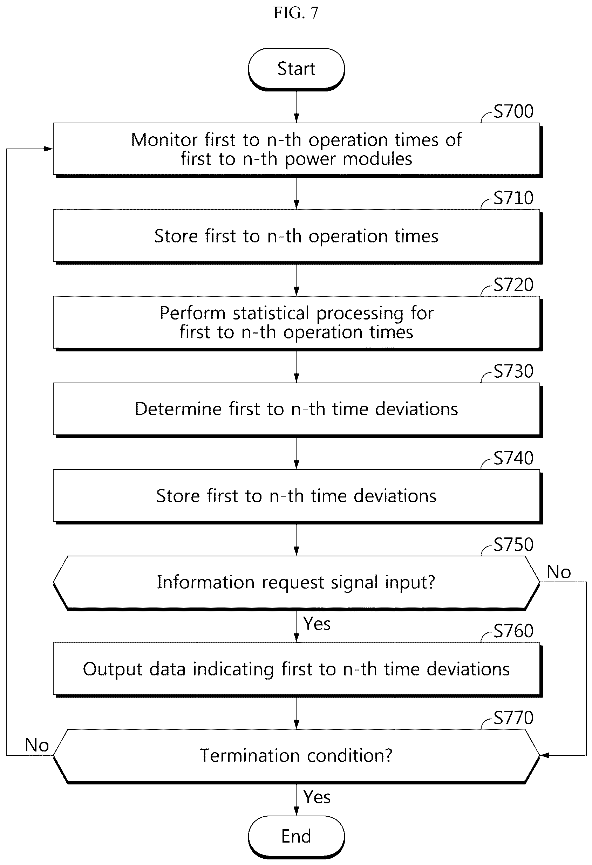

Also in this case, the operation time monitoring process (step S510) and the deviation calculation process (step S520) may be performed continuously and cyclically through the process of subroutines as described below with reference to FIG. 7.

The processes according to FIG. 5 may be applied cyclically when a preset termination condition such as forced termination, system-down or an emergency event is not met (the value of the step S570 is "NO").

Because the operation times of the each power modules 210 change over time, the average and time deviation of the first to n-th operation times also change dynamically.

The present disclosure may detect the time-series changes on the basis of the current time, and repeatedly and cyclically control to start the operation of the power module of interest and stop the operation of the target power module based on the detection results. Accordingly, although the total use of the power supply 200 increases over time, the deviation of the operation time of each of the first to n-th power modules 210-1 to 210-n included in the power supply 200 may continuously lie within the reference deviation.

The operation control unit 137 may output a first command signal for changing the power module of interest from the non-operating state to the operating state. The operation control unit 137 may be configured to output a second command signal for changing the target power module 210 from the operating state to the non-operating state when the dead band time has passed from the output time of the first command signal.

There may be exceptions, but in cases where an accurate and precise hardware device is used, when generating and outputting a digital signal system using analog signals, the values of the output signals may have values between 0 and 1 in the dead band in which the signals change, although for a short period of time.

That is, in the dead band, on the basis of the signal receiving side, the operation stop signal that reduces in size from 1 to 0 and the operation start signal that increases in size from 0 to 1 are received, which makes it ambiguous to discriminate a threshold, and the discrimination operation may not be performed clearly.

As described above, when it is configured to output the operation stop signal after the dead band time has passed on the basis of the output time of the operation start signal, it may be possible to effectively remove the ambiguity in the signal system, thereby enhancing the certainty of operation switching.

A variety of history information including information about the operation time of each of the power modules 210-1 to 210-n, information about switching time between the operating state and the non-operating state or information about which of the operating state and the non-operating state may be stored in the history information storage unit 160 for the purpose of use in the subsequent processes or application processes.

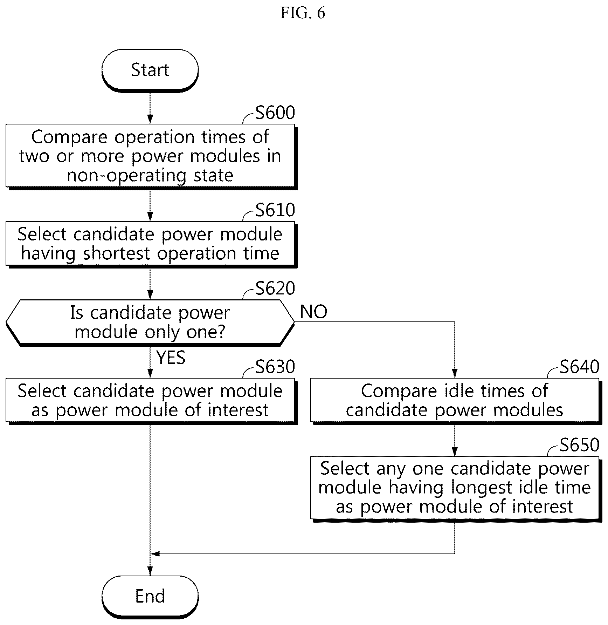

FIG. 6 is a flowchart illustrating the process of selecting the power module of interest 210 using a relative relationship of idle time.

As described above, when there is any power module (for example, 210-1) having the time deviation equal to or more than the reference deviation (the output value of the step S530 is "YES"), the selection unit 135 selects any one power module (for example, 210-2) in the non-operating state (step S540). When two or more power modules are in the non-operating state, the power module (for example, 210-2) selected in the step S540 may be a power module having the shortest operation time.

Specifically, when there are a plurality of power modules in the non-operating state, the selection unit 135 may perform a process (see step S600 in FIG. 6) of comparing the operation time of each of the power modules (for example, 210-2, 210-3, 210-4) to select a candidate power module having the shortest operation time among the plurality of power modules (step S610).

The selection unit 135 determines if the number of candidate power modules is one among the two or more power modules (for example, 210-2, 210-3, 210-4) in the non-operating state (step S620).

When there is a single candidate power module corresponding to the shortest operation time among the plurality of non-operating modules (for example, 210-2, 210-3, 210-4), the selection unit 135 may select that single candidate power module as the power module of interest (step S630).

In contrast, when there are a plurality of candidate power modules having the shortest operation time, the selection unit 135 may compare the idle times of the plurality of candidate power modules on the basis of the current time (step S640) and select any one candidate power module having the longest idle time as the power module of interest (step S650). In the step S650, any one candidate power module having highest priority identification number, not longest idle time, may be selected as the power module of interest (step S650).

The idle time of the power module 210 in the non-operating state may refer to the elapsed time from the latest switching time of the power module 210 from the operating state to the non-operating state. The power module of interest refers to a power module that will take responsibility for supplying direct current power to the electrical load device 50 in place of the target power module that will be stopped soon.

According to the exemplary configuration of the present disclosure, it may be possible to reduce the continuous accumulation and concentration of operation time within the possible range through proper control and management of operation time and idle time. Accordingly, it may be possible to optimize the operation performance of each power module 210 more stably.

According to embodiments, the preset priority information (for example, criteria such as manufacturing date, expiration date, degree of degradation, etc.) may be used in the process of selecting one of the plurality of candidate power modules as the power module of interest.

FIG. 7 is a flowchart illustrating the process of subroutines for cyclically calculating the time deviations of operation times.

As described above, the first to n-th operation times of the first to n-th power modules 210-1 to 210-n, the average of the first to n-th operation times and the deviations of the first to n-th operation times change dynamically over time.

Accordingly, as the related data is updated by cyclically reflecting these changes in the above-described process of the present disclosure, it is possible to prevent the operation time deviation for each power module 210 from increasing too much over the entire period of use.

To this end, the monitoring unit 120 may monitor the first to n-th operation times of the first to n-th power modules 210-1 to 210-n (step S700). The monitoring unit 120 may output the information or data indicating the first to n-th operation times to the deviation calculation unit 133.

The monitoring process (step S700) may be performed on the basis of a predetermined cycle using clock setting, and may be performed aperiodically each time an event such as the start or stop of operation of the power module 210 occurs.

The deviation calculation unit 133 may store the data associated with the first to n-th operation times (step S710). Accordingly, the first to n-th operation times are updated periodically or aperiodically.

According to embodiments, the current input data associated with the first to n-th operation times may be stored by replacing the previously stored data associated with the first to n-th operation times. To increase the efficiency of statistical operations or application processes, the data associated with the first to n-th operation times may be stored in the form of history data in which previous data and current data are combined together.

Subsequently, the deviation calculation unit 133 determines the average by statistical processing for the first to n-th operation times (step S720), and determines the first to n-th time deviations indicating individual differences of the first to n-th operation times with respect to the average (step S730). The deviation calculation unit 133 stores the first to n-th time deviations determined in the step S730 (step S740). Here, the statistical processing may include arithmetic mean calculation or weighted mean calculation as described above.

After the first to n-th time deviations are stored, in response to an information request signal inputted from the selection unit 135 (the value of the step S750 is "YES"), the deviation calculation unit 133 outputs data indicating the latest stored first to n-th time deviations on the basis of the current time to the selection unit 135 (step S760).

When the preset termination condition is not met (the output value of step S770 is "NO"), the process of calculating and outputting the time deviation is preferably performed cyclically and continuously in conjunction with the periodic or aperiodic monitoring results of the monitoring unit 120.

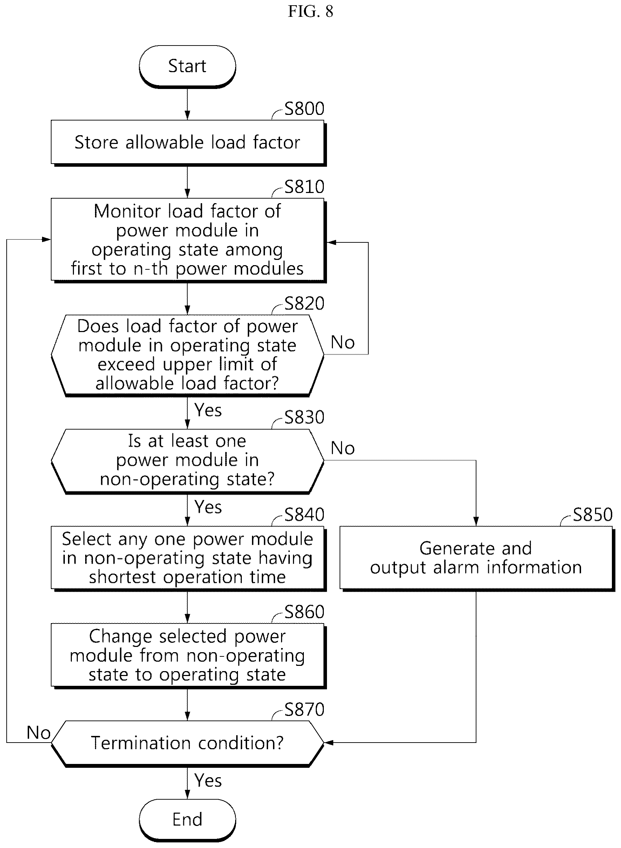

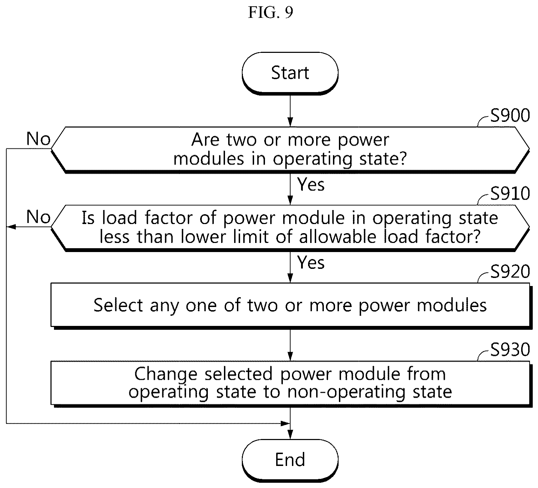

Hereinafter, the processes for maintaining the load factor of the power module in the operating state among the first to n-th power modules 210-1 to 210-n within an allowable load factor range will be described with reference to FIGS. 8 and 9.

The reference information storage unit 131 may store the allowable load factor of the first to n-th power modules 210-1 to 210-n (step S800).

In the present disclosure, the allowable load factor may indicate the upper and lower limits of the load factor at which the input/output efficiency of the power module 210 is equal to or more than a predetermined level.

The upper limit of the allowable load factor may be a criterion for limiting the maximum load (power) for which the power module 210 takes responsibility. The upper limit of the allowable load factor refers to a ratio of allowable maximum output to available maximum output. The lower limit of the allowable load factor refers to a ratio of allowable minimum output to available maximum output. At least one of the upper limit or the lower limit of the allowable load factor may be preset, and in this case, the step S800 may be omitted from the method of FIG. 8.

When the load factor of the power module 210 is lower than the lower limit of the allowable load factor or higher than the upper limit, the input/output efficiency of the power module 210 may not reach the predetermined level. Accordingly, it is necessary to perform a process of adjusting the load factor of the power module 210 in operation between the upper limit and the lower limit of the allowable load factor. The range between the lower limit and the upper limit of the allowable load factor may be referred to as 'allowable load factor range'.

The current load factor of the power module 210 may indicate a ratio of the current output of the power module 210 to the available maximum output. The allowable load factor may be common to the first to n-th power modules 210-1 to 210-n.

For example, when the upper limit of the allowable load factor of the power module 210 having the available maximum power of 20 kW is set to 70%, it is necessary to control the supply power of each power module 210 in the operating state below 14 kW.

To increase the efficiency of description and understanding, assume that the available maximum output of all the first to n-th power modules 210-1 to 210-n is equal.

The monitoring unit 120 may monitor the load factor of the power module in the operating state among the first to n-th power modules 210-1 to 210-n, in conjunction with the measurement unit 110 (step S810). Because the current load factor of the non-operating power module is 0, there is no need to monitor the load factor of each power module in the non-operating state. That is, in this specification, a process related to the load factor of any power module may be on the premise that the power module is in the operating state.

The selection unit 135 classifies each of the first to n-th power modules 210-1 to 210-n into the power module in the operating state or the power module in the non-operating state.

In addition, the selection unit 135 may determine whether the load factor of the power module in the operating state exceeds the upper limit of the allowable load factor (step S820). When the value of the step S820 is "YES", step S830 may be performed.

The selection unit 135 determines whether at least one of the first to n-th power modules 210-1 to 210-n is in the non-operating state (step S830). As a result of the determination in the step S830, when at least one power module is in the non-operating state (i.e., idling), the selection unit 135 may select the power module having the shortest operation time from among the non-operating power modules (step S840). The power module selected in the step S840 may be the same power module as the power module of interest.

The operation control unit 137 may change the power module 210 selected in the step S840 from the non-operating state to the operating state (step S860).

For example, in the case where the allowable load factor is 70%, the available maximum output of the power module 210 is 20 kW and four power modules are currently in operation (i.e., in the operating state), when power consumption of the electrical load device 50 is 50 kW, each power module 210 supplies the power of 50 kW/4 = 12.5 kW. On the basis of this example, the current load factor of each power module 210 is 62.5% (12.5 kW/20 kW) which does not exceed the allowable load factor (70%), so it is not necessary to add another power module 210.

In this case, the above-described process of the present disclosure may be applied, including monitoring the operation time of each of the four power modules and in the event of deviation in the operation time, stopping the operation of the target power module 210 and starting the operation of the power module of interest 210.

In contrast, when power consumption of the electrical load device 50 increases to 72 kW while the four power modules 210 are in the operation state, each of the four power modules 210 supplies the equal power of 18 kW. Accordingly, the current load factor (90%) of the power module 210 exceeds the allowable load factor (70%) (the output value of the step S820 is "YES").

In this case, the selection unit 135 may select any one power module in the non-operating state having the shortest operation time (step S840). Subsequently, the operation control unit 137 may change the power module selected in the step S840 from the non-operating state to the operating state (step S860).

Through the above-described process, when the power module selected from among the first to n-th power modules 210-1 to 210-n is additionally changed to the operating state, the number of power modules in the operating state increases from 4 to 5. As a result, each of the five power modules supplies the power of 72 kW/5 = 14.4 kW to the electrical load device 50. In this case, the load factor of each of the five power modules decreases from 90% to 14.4 kW/20 kW*100% = 72%, but still exceeds the allowable load factor of 70% (the output value of the step S820 is "YES"). Accordingly, the step S840 shown in FIG. 8, i.e., the process of additionally selecting the power module having the shortest operation time from among the remaining non-operating power module(s) may be performed again.

Through this process, when the number of power modules in the operating state increases from 5 to 6, each of the six power modules supplies the power of 12.0 kW (72 kW/six), and each of the six power modules is changed to a stable load state in which the load factor is below the upper limit (70%) of the allowable load factor.

Meanwhile, when the lower limit of the allowable load factor of the power module 210 having the available maximum power of 20 kW is set to 40%, it is necessary to control the power supply of the power module 210 over 8 kW.

When the value of the step S820 is "NO", the method of FIG. 9 may be performed.

Referring to FIG. 9, the selection unit 135 may determine if two or more power modules are in the operating state (step S900). When the value of the step S900 is "YES", step S910 may be performed. The value of the step S900 being "NO" may indicate only one power module in the operating state.

The selection unit 135 may determine if the load factor of the power module in the operating state is below the lower limit of the allowable load factor (step S910). When the value of the step S900 or S910 is "NO", the step S870 in FIG. 8 may be performed.

When the value of the step S910 is "YES", the selection unit 135 may select any one of the two or more power modules in the operating state (step S920). In the step S920, the power module having the longest operation time may be selected.

The operation control unit 137 may change the power module selected in the step S920 from the operating state to the non-operating state (step S930).

For example, assume that the lower limit of the allowable load factor is 40%, the available maximum output of the power module 210 is 20 kW, four power modules are currently in operation (i.e., in the operating state) and power consumption of the electrical load device 50 is 50 kW. The four power modules 210 in operation will be supplying the equal power of 12.5 kW to the electrical load device 50. Because the current load factor of each power module 210 is 12.5 kW/20 kW*100% = 62.5%, which exceeds the lower limit (40%) of the allowable load factor, it may not be necessary to select the power module that will be stopped from among the four power modules 210 in operation. In this case, the above-described processes may be performed, including monitoring the operation time of each of the four power modules in the operating state and in the event of deviation in the operation time, stopping the operation of the target power module and starting the operation of the power module of interest.

In contrast, when power consumption of the electrical load device 50 drops from 50 kW to 30 kW while the four power modules 210 are in the operating state, each of the four power modules 210 supplies the equal power of 7.5 kW, and the load factor of the four power modules 210 decreases from 62.5% to 37.5%.

Accordingly, in the step S910, it is determined that the current load factor (37.5%) of the power module(s) in the operating state is below the lower limit (40%) of the allowable load factor. In this case, the selection unit 135 may select any one power module having the longest operation time from among the four power modules (step S920). Subsequently, the operation control unit 137 may change the power module having the longest operation time from the operating state to the non-operating state (step S930).

When the step S930 is performed, the number of power modules in the operating state decreases from 4 to 3. As a result, each of the three power modules supplies the equal power of 30 kW/3 = 10 kW to the electrical load device 50. In this case, the load factor of each of the three power modules increases from 37.5% to 50%, and lies in between the lower limit (40%) and the upper limit (70%) of the allowable load factor.

Despite the decrease in the number of power modules in the operating state from 4 to 3, when the load factor of the power module 210 in operation is less than the lower limit of the allowable load factor, the steps S920 and S930 shown in FIG. 9 may be performed again.

As described above, through the cyclic application of the process of selecting the target power module and/or the power module of interest from among the first to n-th power modules 210-1 to 210-n based on at least one of the operation time, the idle time or the load factor of each of the first to n-th power modules 210-1 to 210-n, and controlling the switching of each of the selected power modules between the operating state and the non-operating state, the operation time (driving time) and/or the load factor of the individual power module is not much higher or lower than the other power module, thereby achieving more stable operation of the first to n-th power modules 210-1 to 210-n.

In relation to the above-described exemplary configuration, when none of the first to n-th power modules 210-1 to 210-n is currently in the non-operating state, i.e., the first to n-th power modules 210-1 to 210-n are all in operation, it represents the power supply at the load factor of the individual power module 210 above the allowable load factor.

As described above, when all the first to n-th power modules 210-1 to 210-n are in the operating state, but the load factor exceeds the upper limit of the allowable load factor (the output value of the step S820 is "NO"), the information sharing unit 150 may generate alarm information and transmit the generated alarm information to a user terminal, an automotive info system or a control server (step S850). The alarm information may notify the user that overload has occurred. The step S850 may effectively trigger a follow-up action in the dangerous situation in which the output value of the step S830 is "NO".

The process shown in FIG. 8 may also be applied cyclically when the preset termination condition such as forced termination, system-down or an emergency event is not met (the value of the step S870 is "NO").

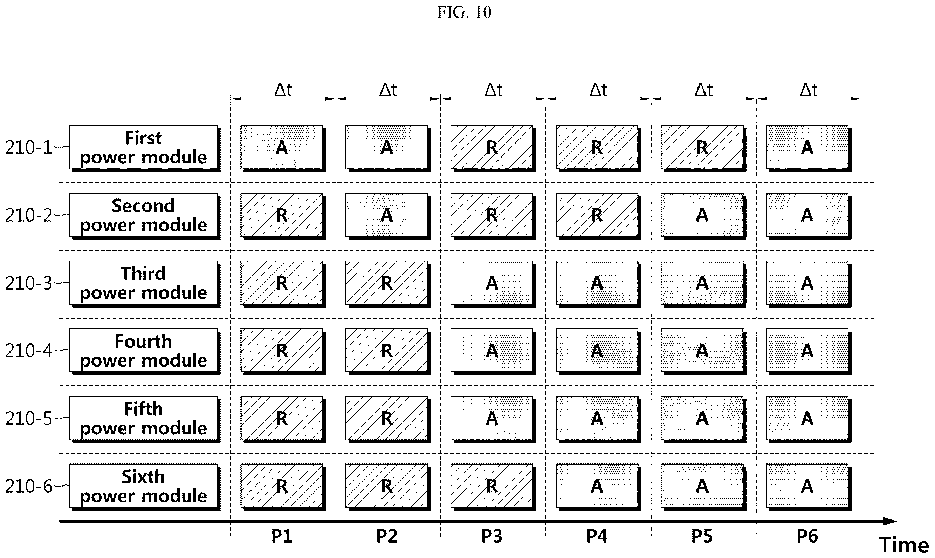

FIG. 10 is a diagram referenced in describing an example of the process for suppressing the deviation of operation time between the plurality of power modules.

In FIG. 10, assume that the power supply 200 includes six power modules 210-1 to 210-6. FIG. 10 shows the representation of the switching of each of the six power modules 210-1 to 210-6 between the operating state and the non-operating state over time during the operation of the direct current power supply system 10. For reference, in FIG. 10, the symbol A indicates the operating state, and the symbol R indicates the idle state (non-operating state).

In addition, six time intervals P1 to P6 may be separated on the basis of the time when the switching event between the operating state and the non-operating state occurs in at least one of the first to sixth power modules 210-1 to 210-6. In describing FIG. 10, it is assumed that all the power modules 210-1 to 210-6 have the same operation time $t_{ac}$ at the start time of the first time interval P1.

As shown, in the first time interval P1, among the first to sixth power modules 210-1 to 210-6, only the first power module 210-1 is in the operating state, and the remaining five power modules 210-2 to 210-6 are in the non-operating state.

When the load factor of the first power module 210-1 is equal to or more than the allowable load factor in the first time interval P1, the power module of interest is selected from among the remaining five power modules 210-2 to 210-6. Accordingly, the second power module 210-2 which was in the non-operating state in the first time interval P1 is changed to the operating state, and the first time interval P1 ends and the second time interval P2 begins.

In the second time interval P2, the first power module 210-1 and the second power module 210-2 supply direct current power to the electrical load device 50. That is, during the second time interval P2, the two power modules 210-1, 210-2 operate in the operating state, while the remaining power modules 210-3, 210-4, 210-5, 210-6 are maintained in the non-operating state.

In the second time interval P2, the time deviation of the operation time of each of the two power modules 210-1, 210-2 may reach the reference deviation, and further, the load factors of the two power modules 210-1, 210-2 may exceed the upper limit of the allowable load factor. Accordingly, among the remaining power modules 210-3, 210-4, 210-5, 210-6, it is necessary to select at least one power module (the power module of interest) that will operate in the operating state in place of at least one of the two power modules 210-1, 210-2 from among the remaining power modules 210-3, 210-4, 210-5, 210-6. FIG. 10 shows that each of the third to fifth power modules 210-3, 210-4, 210-5 is selected as the power module of interest. Accordingly, the first and second power modules 210-1, 210-2 are changed to the non-operating state, and the third to fifth power modules 210-3, 210-4, 210-5 are changed to the operating state, so the second time interval P2 ends and the third time interval P3 begins.

In the third time interval P3, the sixth power module 210-6 is still maintained in the non-operating state.

In the third time interval P3, when the load factor of each of the third to fifth power modules 210-3, 210-4, 210-5 is equal to or more than the allowable load factor, at least one of the remaining three power modules 210-1, 210-2, 210-6 is selected as the power module of interest. Because the sixth power module 210-6 which has been in the non-operating state across the first to third time intervals P1 to P3 will have the shortest operation time but the longest idle time, the sixth power module 210-6 is changed to the operating state. Accordingly, the third time interval P3 ends, and the next fourth time interval P4 begins.

During the fourth time interval P4, the third to sixth power modules 210-3 to 210-6 operate in the operating state, while the first and second power modules 210-1, 210-2 are maintained in the non-operating state.

In the fourth time interval P4, when the load factor of each of the four power modules 210-3 to 210-6 exceeds the upper limit of the allowable load factor, at least one of the first and second power modules 210-1, 210-2 in the non-operating state is changed to the operating state. FIG. 10 shows that the second power module 210-2 is selected as the power module of interest. Accordingly, the fourth time interval P4 ends and the fifth time interval P5 begins.

In the fifth time interval P5, each of the second to sixth power modules 210-2 to 210-6 operates in the operating state, and only the first power module 210-1 is in the non-operating state.

In the fifth time interval P5, when the load factor of each of the five power modules 210-2 to 210-6 exceeds the upper limit of the allowable load factor, even the first power module 210-1 in the non-operating state is changed to the operating state. Accordingly, the fifth time interval P5 ends and the sixth time interval P6 begins.

TABLE 1 below summarizes the changes in the operation time and time deviation of the first to sixth power modules 210-1 to 210-6 during the period of time from the start point of the first time interval P1 to the end point of the sixth time interval P6. TABLE 1 is under the assumption that the time length $\Delta t$ of each of the first to sixth time intervals P1 to P6 is equal.

<TABLE 1>

| Time interval | Longest operation time | | Shortest operation time | | Largest time deviation |
|---|---|---|---|---|---|
| P1 | $t_{ac}+\Delta t$ | First power module | 0 | Second to sixth power modules | $\Delta t$ |
| P2 | $t_{ac}+2\Delta t$ | First power module | 0 | Third to sixth power modules | $2\Delta t$ |

(continued)

| Time interval | Longest operation time | | Shortest operation time | | Largest time deviation |
|---|---|---|---|---|---|
| P3 | $t_{ac}+2\Delta t$ | First power module | 0 | Sixth power module | $2\Delta t$ |
| P4 | $t_{ac}+2\Delta t$ | First, third, fourth and fifth power modules | $t_{ac}+\Delta t$ | Second and sixth power modules | $\Delta t$ |
| P5 | $t_{ac}+3\Delta t$ | Third to fifth power modules | $t_{ac}+2\Delta t$ | First, second and sixth power modules | $\Delta t$ |
| P6 | $t_{ac}+4\Delta t$ | Third to fifth power modules | $t_{ac}+3\Delta t$ | First, second and sixth power modules | $\Delta t$ |

TABLE 1 summarizes the longest operation time, the power module having the longest operation time, the shortest operation time, the power module having the shortest operation time and the largest time deviation (i.e., the difference between the longest operation time and the shortest operation time) for each of the time intervals P1-P6.

As can be seen from TABLE 1, when the above-described control method according to the present disclosure is applied, even though power consumption of the electrical load device 50 changes over time, the largest time deviation of the operation time between the power modules 210-1 to 210-n may be continuously maintained below the reference deviation (for example, $2\Delta t$).

Although the present disclosure has been hereinabove described with regard to certain embodiments and drawings, the present disclosure is not limited thereto, and it is obvious to persons having ordinary skill in the technical field pertaining to the present disclosure that various modifications and variations may be made to the present disclosure within the technical aspect of the present disclosure and the appended claims and their equivalent scope.

In the accompanying drawings used to describe the present disclosure and illustrate the embodiments of the present disclosure, some elements may be exaggerated for emphasis of the technical aspect of the present disclosure, but it should be interpreted that it is obvious that many different variations may be made at the ordinary level, taking into account the foregoing description and the illustrations in the drawings.

In addition, it is obvious to those skilled in the art that the terms first, second, upper, lower, top or bottom as used herein are the terms of instrumental concept used to distinguish one component (element) from another, but not the terms used to indicate a specific order or priority or physically distinguish each component (element) on the absolute basis.

**Claims**

1. A power supply control apparatus for first to n-th power modules connected in parallel to supply direct current power to an electrical load device, the power supply control apparatus comprising:

   a monitoring unit configured to monitor first to n-th operation times of the first to n-th power modules; and
   a main control unit configured to control each of the first to n-th power modules into an operating state or a non-operating state based on the first to n-th operation times,
   wherein n is a natural number of 2 or greater.

2. The power supply control apparatus according to claim 1,
   wherein the main control unit is configured to:

   calculate first to n-th time deviations by statistical processing for the first to n-th operation times,
   select any one power module in the non-operating state from among the first to n-th power modules when the time deviation of any one power module in the operating state among the first to n-th power modules is equal to or more than a reference deviation, and
   change the selected power module from the non-operating state to the operating state.

3. The power supply control apparatus according to claim 2,
   wherein the main control unit is configured to:

   output a first command signal for changing the selected power module from the non-operating state to the operating state,

output a second command signal for changing the power module having the time deviation equal to or more than the reference deviation from the operating state to the non-operating state when a dead band time has passed from an output time of the first command signal.

4. The power supply control apparatus according to claim 2,
wherein the main control unit is configured to:
update the first to n-th time deviations periodically or aperiodically.

5. The power supply control apparatus according to claim 2,
wherein the main control unit is configured to:

when two or more of the first to n-th power modules are in the non-operating state,
select any one of the two or more power modules in the non-operating state based on the operation time, an idle time or an identification number of each of the two or more power modules in the non-operating state.

6. The power supply control apparatus according to claim 1,
wherein the main control unit is configured to:

when a load factor of each power module in the operating state among the first to n-th power modules exceeds an upper limit of an allowable load factor,
select any one power module in the non-operating state from among the first to n-th power modules, and change the selected power module from the non-operating state to the operating state.

7. The power supply control apparatus according to claim 1, further comprising:
an information sharing unit configured to generate danger alarm information when all the first to n-th power modules are in the operating state and a load factor of each of the first to n-th power modules exceeds an upper limit of an allowable load factor.

8. The power supply control apparatus according to claim 1,
wherein the main control unit is configured to:

when a load factor of two or more power modules in the operating state among the first to n-th power modules is below a lower limit of an allowable load factor,
change any one of the two or more power modules in the operating state from the operating state to the non-operating state.

9. A direct current power supply system comprising the power supply control apparatus according to any one of claims 1 to 8.

10. A power supply control method for first to n-th power modules connected in parallel to supply direct current power to an electrical load device, the power supply control method comprising:

monitoring first to n-th operation times of the first to n-th power modules; and
controlling each of the first to n-th power modules into an operating state or a non-operating state based on the first to n-th operation times,
wherein n is a natural number of 2 or greater.

11. The power supply control method according to claim 10,
wherein controlling each of the first to n-th power modules into the operating state or the non-operating state comprises:

calculating first to n-th time deviations by statistical processing of the first to n-th operation times;
selecting any one power module in the non-operating state from among the first to n-th power modules when the time deviation of any one power module in the operating state among the first to n-th power modules power modules is equal to or more than a reference deviation; and
changing the selected power module from the non-operating state to the operating state.

12. The power supply control method according to claim 11,

wherein the step of selecting any one power module in the non-operating state from among the first to n-th power modules comprises:

when two or more power modules are in the non-operating state among the first to n-th power modules, selecting any one of the two or more power modules in the non-operating state based on the operation time, an idle time or an identification number of each of the two or more power modules in the non-operating state.

13. The power supply control method according to claim 10, further comprising:

when a load factor of each power module in the operating state among the first to n-th power modules exceeds an upper limit of an allowable load factor, selecting any one power module in the non-operating state from among the first to n-th power modules; and changing the selected power module from the non-operating state to the operating state.

14. The power supply control method according to claim 10, further comprising the step of:

when a load factor of two or more power modules in the operating state among the first to n-th power modules is below a lower limit of an allowable load factor, changing any one of the two or more power modules in the operating state from the operating state to the non-operating state.

FIG. 1

Direct current power supply system(10)

Power supply control apparatus /100

/200

Power module /210-1

Power module /210-2

.... .... 

Power module /210-n

Electrical load device /50

FIG. 2

FIG. 3

┌─ 100
Power supply control apparatus

┌─ 200
Power device

┌─ 110
Measurement unit

┌─ 120
Monitoring unit

┌─ 140
Switching unit

┌─ 130
Main control unit

┌─ 150
Information sharing unit

┌─ 160
History information storage unit

FIG. 4

FIG. 5

```
                          ┌─────────┐
                          │  Start  │
                          └─────────┘
                               │
                               ▼                        ┌S500
        ┌──────────────────────────────────────────────┐
        │            Store reference deviation          │
        └──────────────────────────────────────────────┘
                               │
                               ▼                        ┌S510
        ┌──────────────────────────────────────────────┐
   ┌───▶│      Monitor first to n-th operation times of │◀───┐
   │    │            first to n-th power modules         │    │
   │    └──────────────────────────────────────────────┘    │
   │                           │                             │
   │                           ▼                    ┌S520     │
   │    ┌──────────────────────────────────────────────┐    │
   │    │       Determine first to n-th time deviations │    │
   │    └──────────────────────────────────────────────┘    │
   │                           │                             │
   │                           ▼                 ┌S530        │
   │    ╱─────────────────────────────────────────╲  NO      │
   │    ╲ Is there any of first to n-th time deviations ╲────┘
   │      ╲ equal to or more than reference deviation? ╱
   │       ╲───────────────────────────────────────╱
   │                           │ YES
   │                           ▼              ┌S540
   │    ┌──────────────────────────────────────────────┐
   │    │   Select any one power module in non-operating │
   │    │        state as power module of interest       │
   │    └──────────────────────────────────────────────┘
   │                           │
   │                           ▼              ┌S550
   │    ┌──────────────────────────────────────────────┐
   │    │        Change power module of interest from    │
   │    │         non-operating state to operating state │
   │    └──────────────────────────────────────────────┘
   │                           │
   │                           ▼              ┌S560
   │    ┌──────────────────────────────────────────────┐
   │    │          Change target power module from       │
   │    │      operating state to non-operating state    │
   │    └──────────────────────────────────────────────┘
   │                           │
   │                           ▼              ┌S570
   │  NO ╱─────────────────────────────────────────╲
   └─────╲           Termination condition?          ╱
          ╲───────────────────────────────────────╱
                               │ YES
                               ▼
                          ┌─────────┐
                          │   End   │
                          └─────────┘
```

FIG. 6

```
                    ┌─────────┐
                    │  Start  │
                    └────┬────┘
                         │            ┌S600
           ┌─────────────▼─────────────┐
           │   Compare operation times of │
           │ two or more power modules in │
           │      non-operating state     │
           └─────────────┬─────────────┘
                         │            ┌S610
           ┌─────────────▼─────────────┐
           │  Select candidate power module │
           │   having shortest operation time │
           └─────────────┬─────────────┘
                         │            ┌S620
           ╱─────────────▼─────────────╲  NO
          ╱    Is candidate power        ╲──────────┐
          ╲     module only one?         ╱          │
           ╲──────────────┬─────────────╱           │
                     YES  │                         │
                         │    ┌S630                 │    ┌S640
           ┌─────────────▼─────────────┐  ┌─────────▼─────────┐
           │  Select candidate power module │  │ Compare idle times of │
           │    as power module of interest │  │ candidate power modules │
           └─────────────┬─────────────┘  └─────────┬─────────┘
                         │                          │    ┌S650
                         │              ┌───────────▼───────────┐
                         │              │ Select any one candidate power │
                         │              │ module having longest idle time │
                         │              │   as power module of interest  │
                         │              └───────────┬───────────┘
                         │                          │
                         ◄──────────────────────────┘
                         │
                    ┌────▼────┐
                    │   End   │
                    └─────────┘
```

FIG. 7

Start

↓ S700

Monitor first to n-th operation times of
first to n-th power modules

↓ S710

Store first to n-th operation times

↓ S720

Perform statistical processing for
first to n-th operation times

↓ S730

Determine first to n-th time deviations

↓ S740

Store first to n-th time deviations

↓ S750

Information request signal input? —No—→

↓ Yes          S760

Output data indicating first to n-th time deviations

↓ S770

No — Termination condition? ←

↓ Yes

End

FIG. 8

```
                    ┌─────────┐
                    │  Start  │
                    └─────────┘
                         │
                         ▼          ┌S800
         ┌───────────────────────────────┐
         │   Store allowable load factor  │
         └───────────────────────────────┘
                         │
                         ▼          ┌S810
         ┌───────────────────────────────┐
         │       Monitor load factor of   │
         │          power module in       │
         │        operating state among   │
         │     first to n-th power modules│
         └───────────────────────────────┘
                         │
                         ▼          ┌S820
         ┌───────────────────────────────┐
         │     Does load factor of power  │ ── No ──┐
         │   module in operating state    │         │
         │        exceed upper limit of   │         │
         │       allowable load factor?   │         │
         └───────────────────────────────┘         │
                    │ Yes                           │
                    ▼          ┌S830                │
         ┌───────────────────────────┐              │
         │      Is at least one       │ ── No ──┐   │
         │       power module in      │         │   │
         │     non-operating state?   │         │   │
         └───────────────────────────┘         │   │
                    │ Yes                       │   │
                    ▼         ┌S840             ▼       ┌S850
    ┌───────────────────────────┐   ┌───────────────────────────┐
    │  Select any one power module│   │       Generate and        │
    │  in non-operating state     │   │   output alarm information │
    │  having shortest operation  │   └───────────────────────────┘
    │  time                       │              │
    └───────────────────────────┘              │
                    │         ┌S860             │
                    ▼                           │
    ┌───────────────────────────┐              │
    │     Change selected power  │              │
    │   module from non-operating│              │
    │    state to operating state│              │
    └───────────────────────────┘              │
                    │         ┌S870             │
                    ▼                           │
    No ┌───────────────────────────┐◄──────────┘
    ┌──│    Termination condition?  │
    │  └───────────────────────────┘
    │               │ Yes
    │               ▼
    │          ┌─────────┐
    │          │   End   │
    │          └─────────┘
```

FIG. 9

```
                          ┌──────────┐
                          │   Start  │
                          └──────────┘
                                │
                                │                          ┌S900
        No ╱─────────────────────────────────────────╲
    ◄──────┤          Are two or more power             │
           ╲      modules in operating state?          ╱
             ─────────────────┬───────────────────────
                            Yes │
                                │                          ┌S910
        No ╱─────────────────────────────────────────╲
    ◄──────┤   Is load factor of power module in operating state │
           ╲   less than lower limit of allowable load factor?  ╱
             ─────────────────┬───────────────────────
                            Yes │
                                │                          ┌S920
           ┌────────────────────────────────────────┐
           │   Select any one of two or more power modules │
           └────────────────────────────────────────┘
                                │
                                │                          ┌S930
           ┌────────────────────────────────────────┐
           │     Change selected power module from    │
           │   operating state to non-operating state │
           └────────────────────────────────────────┘
                                │
                          ┌──────────┐
                          │    End   │
                          └──────────┘
```

FIG. 10

EP 4 741 998 A1

# EP 4 741 998 A1

## INTERNATIONAL SEARCH REPORT

International application No.

**PCT/KR2024/096537**

| A. | CLASSIFICATION OF SUBJECT MATTER |
|---|---|

**G06F 1/26**(2006.01)i; **G06F 1/28**(2006.01)i

According to International Patent Classification (IPC) or to both national classification and IPC

| B. | FIELDS SEARCHED |
|---|---|

Minimum documentation searched (classification system followed by classification symbols)

G06F 1/26(2006.01); H01M 10/44(2006.01); H01M 10/48(2006.01); H02J 7/00(2006.01); H02J 7/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전원공급 제어 장치(power supply control device), 전기 부하 기기(electrical load device), 전원 모듈(power module), 구동 시간(operating time), 모니터링(monitoring), 구동 상태(operating status)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2018-0219390 A1 (GBATTERIES ENERGY CANADA INC.) 02 August 2018 (2018-08-02)<br>See paragraphs [0032]-[0035]; claims 8 and 12; and figure 1. | 1,6-10,13-14 |
| A | | 2-5,11-12 |
| Y | KR 10-2004-0087037 A (HANRIM POSTECH LLC) 13 October 2004 (2004-10-13)<br>See paragraphs [0032] and [0056]; and figure 1. | 1,6-10,13-14 |
| A | JP 2013-239280 A (PANASONIC CORP.) 28 November 2013 (2013-11-28)<br>See paragraphs [0041]-[0053]; and figure 2. | 1-14 |
| A | KR 10-2015-0137678 A (SAMSUNG ELECTRONICS CO., LTD.) 09 December 2015 (2015-12-09)<br>See paragraphs [0075]-[0078]; and figure 4. | 1-14 |
| A | KR 10-2021-0050396 A (LG CHEM, LTD.) 07 May 2021 (2021-05-07)<br>See paragraphs [0048]-[0050]; and figure 3. | 1-14 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **27 February 2025** | **28 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/096537**

| Patent document cited in search report | | | Publication date (day/month/year) | Patent family member(s) | | | Publication date (day/month/year) |
|---|---|---|---|---|---|---|---|
| US | 2018-0219390 | A1 | 02 August 2018 | CN | 109417301 | A | 01 March 2019 |
| | | | | CN | 109417301 | B | 06 December 2022 |
| | | | | EP | 3459155 | A1 | 27 March 2019 |
| | | | | EP | 3459155 | A4 | 15 January 2020 |
| | | | | EP | 3459155 | B1 | 17 February 2021 |
| | | | | KR | 10-2019-0026874 | A | 13 March 2019 |
| | | | | KR | 10-2376225 | B1 | 17 March 2022 |
| | | | | US | 10069313 | B2 | 04 September 2018 |
| | | | | US | 10135281 | B2 | 20 November 2018 |
| | | | | US | 10840725 | B2 | 17 November 2020 |
| | | | | US | 11362535 | B2 | 14 June 2022 |
| | | | | US | 2018-0013306 | A1 | 11 January 2018 |
| | | | | US | 2019-0081486 | A1 | 14 March 2019 |
| | | | | US | 2021-0006086 | A1 | 07 January 2021 |
| | | | | WO | 2018-010019 | A1 | 18 January 2018 |
| KR | 10-2004-0087037 | A | 13 October 2004 | AU | 2003-304023 | A1 | 25 October 2004 |
| | | | | KR | 10-0505484 | B1 | 05 August 2005 |
| | | | | WO | 2004-088816 | A1 | 14 October 2004 |
| JP | 2013-239280 | A | 28 November 2013 | None | | | |
| KR | 10-2015-0137678 | A | 09 December 2015 | KR | 10-2165937 | B1 | 14 October 2020 |
| | | | | US | 10451679 | B2 | 22 October 2019 |
| | | | | US | 10656209 | B2 | 19 May 2020 |
| | | | | US | 2015-0349547 | A1 | 03 December 2015 |
| | | | | US | 2017-0234932 | A1 | 17 August 2017 |
| | | | | US | 2020-0025829 | A1 | 23 January 2020 |
| | | | | US | 9660462 | B2 | 23 May 2017 |
| KR | 10-2021-0050396 | A | 07 May 2021 | KR | 10-2729621 | B1 | 14 November 2024 |

Form PCT/ISA/210 (patent family annex) (July 2022)

**EP 4 741 998 A1**